# EUROPÄISCHE PATENTANMELDUNG

(11) **EP 2 200 140 A2**
(43) Veröffentlichungstag der Anmeldung: **23.06.2010**
(21) Anmeldenummer: 09171167.1
(22) Anmeldetag: 24.09.2009
(51) Int. Cl.: H02H 7/16, H02H 9/02, H02H 9/04

(54) **Schutzvorrichtung für zumindest einen dauerversorgten Kondensator**

(30) Priorität: 20.11.2008 DE 102008043923
(71) Anmelder: Robert Bosch GmbH, 70442 Stuttgart (DE)
(72) Erfinder: Murgas, Marcell, H 8220 Balatonamaldi (HU); Haeffner, Juergen, 71116 Gaertringen (DE); Varadi, Ferenc, H 1203 Budapest (HU); Uti, Karoly, H 1119 Budapest (HU)

(57) **Zusammenfassung**

Es wird eine Schutzvorrichtung für zumindest einen dauerversorgten Kondensator vorgeschlagen, umfassend zumindest einen Kondensator 16 zur Pufferung der Versorgungsspannung einer Elektonikeinheit 20, die dauerhaft aus einem Bordnetz 10 bzw. einer Batterie versorgt ist, wobei der Kondensator 16 eine Puffer- bzw. Schutzfunktion der Elektronik 20 gewährleistet, **dadurch gekennzeichnet, dass** zumindest eine strombegrenzende Einrichtung 18 vorgesehen ist die den Strom durch den Kondensator 16 im Falle eines Kurzschlusses des Kondensators 16 begrenzt.

## Beschreibung

### Stand der Technik

Die Erfindung geht aus von einer Schutzvorrichtung für zumindest einen dauerversorgten Kondensator nach der Gattung des unabhängigen Anspruchs. Aus der DE 102 01 756 A1 ist bereits eine Schaltungsanordnung zur kurzzeitigen Aufrechterhaltung wenigstens einer internen Betriebs-Gleichspannung beim Ausfall der Bordnetz-Versorgungsspannung bekannt. Bei Ausfällen der Bordnetz-Versorgungsspannung ist ein Energie-Reservespeicher vorgesehen, an den im regulären Betrieb eine Ladespannung angelegt ist, die höher als die wenigstens eine interne Betriebs-Gleichspannung ist, und der bei Ausfall der Bordnetz-Versorgungsspannung eine Reservespannung abgibt. Hierdurch kann für einen begrenzten Zeitraum der Betrieb zumindest weniger Elektronikschaltungen aufrechterhalten werden. Weiterhin ist ein Abwärtsregler vorgesehen, der die angelegte Eingangs-Gleichspannung auf die wenigstens eine interne Betriebs-Gleichspannung herunterregelt. Im regulären Betrieb ist die Versorgungs-Gleichspannung sowohl an den Energie-Reservespeicher unmittelbar als Ladespannung als auch an den Abwärtsregler als Eingangs-Gleichspannung angelegt.

Neben der Pufferung der Versorgung können die Kondensatoren zusätzlich Schutzfunktionen gegen Störimpulse auf dem Bordnetz übernehmen. Um möglichst nieder-impedant zu sein und somit eine maximale Puffer- sowie Schutzfunktion zu gewährleisten, sind die Kondensatoren üblicherweise direkt oder nur sehr nieder-impedant an die Versorgungsleitung angebunden, sodass sowohl bei Lade- als auch Entladevorgängen nahezu keine strombegrenzenden Elemente wie beispielsweise ohmsche Widerstände wirksam sind. Damit besteht ein gewisses Risiko eines Bordnetz-Kurzschlusses. Es ist Aufgabe der vorliegenden Erfindung, bei Minimierung des Platzbedarfs und der Kosten einen Geräteausfall zu vermeiden. Diese Aufgabe wird gelöst durch die Merkmale des unabhängigen Anspruchs.

### Vorteile der Erfindung

Die erfindungsgemäße Schutzvorrichtung für zumindest einen dauerversorgten Kondensator gemäß der Merkmale des unabhängigen Anspruchs 1 hat demgegenüber den Vorteil, dass durch das Vorsehen einer strombegrenzenden Einrichtung gefährliche Betriebszustände verringert werden, indem der durch den Kondensator fließende Strom auf ein unkritisches Maß begrenzt werden kann. Damit wird ein Brand einer von einem Kondensator gepufferten Steuergeräteeinheit bzw. Elektronik zuverlässig verhindert, indem die Gefahr einer Überhitzung bei defektem Kondensator reduziert wird. Die vorgeschlagene Lösung zeichnet sich darüber hinaus durch große Einfachheit mit entsprechenden Kostenvorteilen aus.

In einer zweckmäßigen Weiterbildung ist als strombegrenzende Einrichtung eine Parallelschaltung aus einem ohmschen Widerstand und einer Diode, vorzugsweise einer Zenerdiode, vorgesehen. Der Widerstand verhindert zuverlässig durch die strombegrenzende Wirkung eine Überhitzung eines defekten Kondensators. Die hierzu parallel geschaltete Diode, vorzugsweise eine Zenerdiode, beginnt bei hohen transienten Überspannungen im Bordnetz zu leiten und schützt so zusammen mit dem Kondensator die Elektronik. Die gewählte strombegrenzende Einrichtung reduziert die Kosten durch lediglich nur notwendige einfache Ausführung des Kondensators an Stelle einer sonst üblichen zwei- oder vierfachen Ausführung durch geeignete parallele bzw. serielle Schaltung weiterer Kondensatoren. Der Schutz gegen transiente Überspannungen ist nur bei Verwendung einer Zenerdiode gegeben. Trotzdem ist auch eine Ausführung mit einfacher Diode für manche Anwendungen denkbar, da kostengünstiger.

Weitere zweckmäßige Weiterbildungen ergeben sich aus weiteren abhängigen Ansprüchen und aus der Beschreibung.

### Zeichnung

Unterschiedliche Ausführungsbeispiele einer Schutzvorrichtung für zumindest einen dauerversorgten Kondensator sind in der Zeichnung dargestellt und werden nachfolgend näher erläutert.

Es zeigen
Die Figur 1 eine erste Anordnungsmöglichkeit der strombegrenzenden Einrichtung,
die Figur 2 eine detailliertere Darstellung der strombegrenzenden Einrichtung gemäß Figur 1 sowie
die Figur 3 eine alternative Anordnung der strombegrenzenden Einrichtung.

Eine Elektronik 20 wird über eine als Verpolschutz wirkende Diode 14 von einem Bordnetz 10 versorgt. Der andere Eingang der Elektronik 20 liegt auf Masse 12. Parallel zu den 2 Eingängen der Elektronik 20 sind ein Kondensator 16 und eine strombegrenzende Einrichtung 18 in Reihe geschaltet. Hierbei ist die strombegrenzende Einrichtung 18 mit Masse 12 verbunden.

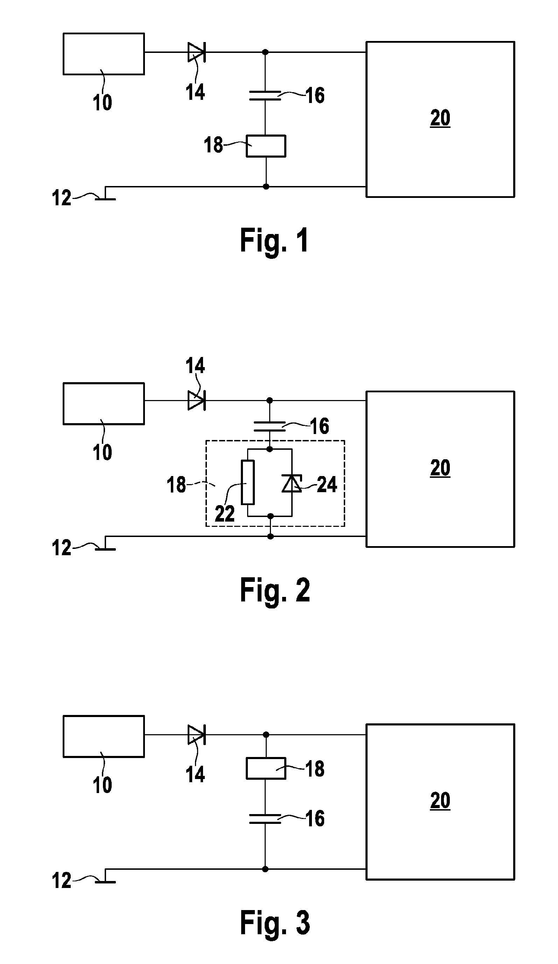

Das Ausführungsbeispiel gemäß Figur 2 unterscheidet sich von demjenigen nach Figur 1 lediglich in einer detaillierten Darstellung der strombegrenzenden Einrichtung 18. Als strombegrenzende Einrichtung 18 ist ein Widerstand 22 parallel zu einer Diode 24, vorzugsweise eine Zenerdiode, verschaltet. Die Anode der Zenerdiode 24 ist mit Masse 12 verbunden.

Bei dem Ausführungsbeispiel gemäß Figur 3 ist ein Anschluss des Kondensators 16 auf Masse 12 gelegt, während ein Anschluss der strombegrenzenden Einrichtung 18 mit der Katode der Diode 14 elektrisch leitend verbunden ist.

Die Elektronik 20 ist beispielsweise Bestandteil eines Steuergeräts bzw. eines elektrischen Verbrauchers vorzugsweise in einem Kraftfahrzeug. Sie wird dauerhaft aus dem Bordnetz 10 bzw. einer zugehörigen Batterie versorgt. Üblicherweise erfolgt dies über die sogenannte Klemme 30 der Bordnetzbatterie. Der Kondensator 16 dient der Pufferung der Versorgungsspannung der Elektronik 20, um die Elektronikeinheit auch während transienter Spannungseinbrüche der Bordnetzspannung, wie sie beispielsweise während Startvorgängen auftreten können, zu versorgen. Insbesondere durch neue Anwendungen wie Start-Stopp-Funktionen oder ähnliches treten derartige Spannungseinbrüche vermehrt auf. Weiterhin ist der Kondensator 16 so dimensioniert, dass er gegen Störimpulse auf dem Bordnetz 10 wie beispielsweise ISO-Pulsen, EMV-Störimpulsen sowie ESD-Impulsen usw. schützt. Weiterhin ist der Kondensator 16 möglichst nieder impendant gewählt, damit eine maximale Puffer- bzw. Schutzfunktion gewährleistet werden kann. Für die oben genannten Funktionen, nämlich Pufferung und Schutzfunktion, werden üblicher Weise drei Kondensatortechnologien eingesetzt. Zwar eignen sich grundsätzlich Tantal-Kondensatoren, die jedoch im Wesentlichen auf Grund ihrer hohen Ausfallraten und Ausfallmechanismen (Kurzschlußverhalten im Fehlerfall) für Neuanwendungen im Kraftfahrzeug-Umfeld überwiegend gemieden werden. Elektrolyt-Kondensatoren eigenen sich zwar grundsätzlich auf Grund hoher Kapazität und Energiedichte, nicht jedoch für alle Einsatzbedingungen wie beispielsweise hohe Temperaturen während der Fertigung oder im Betrieb. Keramik-Kondensatoren (üblicher Weise sog. Multi-Layer-Ceramic-Capacitors MLCC) eigenen sich für einen weiten Temperaturbereich. Allerdings neigen sie im Falle eines Keramikbruchs zu (schleichenden) Kurzschlüssen.

Die Diode 14 wirkt als Verpolschutzdiode. Sie kann je nach Verbraucher und Ausführung des Kondensators 16 auch entfallen oder direkt vor der Elektronik 20 angeordnet werden.

Bei der schaltungstechnischen Ausführung der strombegrenzenden Ausrichtung gemäß Figur 2 lädt sich der Kondensator 20 im stationären Zustand prinzipiell über den Widerstand 22 auf die Bordnetzspannung abzüglich der Durchlassspannung der Verpolschutzdiode 14 auf. Die Zenerdiode 24 sperrt. Im Normalbetrieb bleibt die Verpolschutzdiode 14 leitend und die Elektronik 20 versorgt sich direkt aus dem Bordnetz 10. Bricht die Bordnetzspannung abrupt ein, so sperrt die Verpolschutzdiode 14 und die Elektronik 20 versorgt sich aus dem Kondensator 16 über die strombegrenzende Einrichtung 18, wobei die Zenerdiode 24 in Vorwärtsrichtung leitet. Für den Fehlerfall eines Kurzschlusses des Kondensators 16 begrenzte Widerstand 22 den Strom auf ein unkritisches Maß, sodass ein Brand der Elektronik 20 zuverlässig verhindert wird. Für den Fall hoher transienter Überspannungen im Bordnetz beginnt die Zenerdiode 24 zu leiten und schützt zusammen mit dem Kondensator 16 die Elektronik 20.

Gemäß Figur 3 lässt sich die strombegrenzende Einrichtung 18 auch an das gemeinsame Potenzial der Diode 14 legen. Die prinzipielle Funktion ist hierbei unverändert.

Für die Zenerdiode 24 liegt die Zenerspannung vorzugsweise im Bereich von 16 bis 33 V, besonders bevorzugt bei 18 V. Der Widerstandsbereich des Widerstands 22 liegt vorzugsweise zwischen 470 Ω und 22 kΩ, besonders bevorzugt bei 4,7 kΩ. Die Kapazität des Kondensators 16 liegt vorzugsweise zwischen 1µ*F* und 47 µ*F*, besonders bevorzugt bei 10 µ*F*.

Die vorgeschlagene Schutzvorrichtung für dauerversorgte Kondensatoren 16 eignet sich insbesondere für eine Elektronikeinheit 20 eines Batteriesensors. Dieser Batteriesensor erfasst bestimmte Kenngrößen der Batterie wie beispielsweise Strom, Spannung sowie Temperatur und ermittelt daraus den Ladezustand der Batterie. Die Verwendung der Schutzvorrichtung ist jedoch hierauf nicht eingeschränkt.

## Patentansprüche

1. Schutzvorrichtung für zumindest einen dauerversorgten Kondensator, umfassend zumindest einen Kondensator (16) zur Pufferung der Versorgungsspannung einer Elektonikeinheit (20), die dauerhaft aus einem Bordnetz (10) bzw. einer Batterie versorgt ist, wobei der Kondensator (16) eine Puffer- bzw. Schutzfunktion der Elektronik (20) gewährleistet, **dadurch gekennzeichnet, dass** zumindest eine strombegrenzende Einrichtung (18) vorgesehen ist, die den Strom durch den Kondensator (16) im Falle eines Kurzschlusses des Kondensators (16) begrenzt.

2. Vorrichtung nach Anspruch 1, **dadurch gekennzeichnet, dass** die strombegrenzende Einrichtung in Reihe mit dem Kondensator (16) geschaltet ist.

3. Vorrichtung nach einem der vorhergehenden Ansprüche, **dadurch gekennzeichnet, dass** als strombegrenzende Einrichtung (18) eine Parallelschaltung aus Widerstand (22) und Diode (24) vorgesehen ist.

4. Vorrichtung nach einem der vorhergehenden Ansprüche, **dadurch gekennzeichnet, dass** als Diode eine Zenerdiode (24) vorgesehen ist.

5. Vorrichtung nach einem der vorhergehenden Ansprüche, **dadurch gekennzeichnet, dass** die Anode der Diode (24) mit Masse (12) verbunden ist.

6. Vorrichtung nach einem der vorhergehenden Ansprüche, **dadurch gekennzeichnet, dass** als Kondensator (16) ein Keramikkondensator vorgesehen ist.

7. Vorrichtung nach einem der vorhergehenden Ansprüche, **dadurch gekennzeichnet, dass** zwischen Bordnetz (10) und Elektronik (20) eine als Verpolschutz wirkende Diode (14) vorgesehen ist.

8. Vorrichtung nach einem der vorhergehenden Ansprüche, **dadurch gekennzeichnet, dass** als Elektronik (20) ein Batteriesensor vorgesehen ist, der aus bestimmten Kenngrößen wie Strom, Spannung oder Temperatur den Ladezustand einer Batterie ermittelt.

9. Vorrichtung nach einem der vorhergehenden Ansprüche, **dadurch gekennzeichnet, dass** die Zenerspannung der Zenerdiode (24) zwischen 16 und 33 V liegt, bevorzugt bei ca. 18 V.

10. Vorrichtung nach einem der vorhergehenden Ansprüche, **dadurch gekennzeichnet, dass** der Widerstand (22) im Bereich zwischen 470 Ω und 22 kΩ liegt, bevorzugt bei ca. 4,7 kΩ.

11. Vorrichtung nach einem der vorhergehenden Ansprüche, **dadurch gekennzeichnet, dass** die Kapazität des Kondensators (16) zwischen 1 µ*F* und 47 µ*F* liegt, bevorzugt bei ca. 10 µ*F.*
